# DEMANDE DE BREVET EUROPEEN

(11) **EP 0 893 597 A1**
(43) Date de publication de la demande: **27.01.1999**
(21) Numéro de dépôt: 98401873.9
(22) Date de dépôt: 23.07.1998
(51) Int. Cl.: F02K 1/68

(54) **Inverseur de poussée de turbosoufflante à obstacles à guidage axial**

(30) Priorité: 24.07.1997 FR 9709400
(71) Demandeur: Hispano-Suiza Aérostructures, 76700 Gonfreville l'Orcher (FR)
(72) Inventeur: Gonidec, Patric, 76290 Montvilliers (FR); Rouyer, Pascal Gérard, 76430 Saint Aubin Routot (FR); Vauchel Guy Bernard, 76610 Le Havre (FR)

(57) **Abrégé**

Un inverseur de poussée de turbosoufflante comporte des obstacles (3) escamotés, en poussée directe, dans la paroi (4) du capot primaire de turbosoufflante et déployés pour former un ensemble annulaire de déviation de flux en procurant une inversion de poussée sous l'action de vérins (6) disposés à l'intérieur du capot primaire (4). Chaque obstacle (3) est entrainé en rotation par un élément de liaison (9) autour d'un pivot mobile (12) qui est entrainé en translation par au moins un ensemble constitué par ledit vérin (6) et un élément de guidage (10), le vérin (6) entraine l'obstacle (3) par son aval vers une direction amont parallèle à l'axe de turbosoufflante et se trouve dans l'alignement de l'élément de guidage (10).

## Description

La présente invention concerne un inverseur de poussée pour turbosoufflante, préférentiellement à grand taux de dilution.

Dans ce type de turboréacteur comprenant un canal primaire de circulation des gaz dits de flux chaud constituant une veine d'éjection et un canal annulaire, coaxial au canal primaire, où circulent des gaz dits de flux froid, à la sortie, par exemple, d'une soufflante située à l'entrée du turboréacteur, et constituant une veine secondaire d'éjection, l'inversion de poussée met en oeuvre principalement ou uniquement la déviation du flux secondaire, et ceci particulièrement lorsque le taux de dilution est élevé.

Il est connu dans ces applications d'utiliser des éléments déplaçables ou obstacles susceptibles en position déployée de former un ensemble annulaire continu qui obture ledit canal secondaire de manière à dévier le flux secondaire et à orienter les nappes du flux en procurant une inversion de poussée. Lors du fonctionnement en poussée directe, par contre, lesdits obstacles doivent être rétractés et escamotés en laissant libre et dégagé le canal secondaire pour la circulation du flux secondaire. Dans certains types connus d'inverseur de poussée, lesdits obstacles sont ainsi escamotés dans la paroi radialement externe du canal secondaire.

D'autres solutions prévoient d'escamoter lesdits obstacles au niveau de la paroi radialement interne du canal secondaire ou paroi enveloppant la partie interne ou centrale du moteur, encore appelée capot primaire. Des solutions de ce type sont notamment décrites par FR-A-1 479 131. Diverses améliorations ont été proposées par FR-A-2 625 261 ou par FR-A-2 650 861.

Cette solution est notamment applicable lorsque les taux de dilution sont élevés et lorsque la paroi radialement externe du canal secondaire est plus courte que la paroi radialement interne dudit canal secondaire.

Selon US 3 280 561 et FR 2 625 261, les éléments déplaçables ou obstacles sont dans ce cas montés sur la structure fixe entourant la génératrice de gaz du moteur au moyen de pivots fixes. L'articulation de pivotement des obstacles peut être placée du côté aval mais dans ce cas, le déplacement de l'obstacle amène une position d'obstruction du canal secondaire gênante pour le fonctionnement du moteur. Des problèmes de sécurité subsistent du fait que les obstacles ne sont pas auto-fermants. Dans le cas où l'articulation est placée du côté amont, la déviation du jet est obtenue par la face externe des obstacles, ce qui ne permet pas une optimisation de formes adaptée à la fois à la déviation et au jet direct. Un autre inconvénient majeur dans ce cas tient à la nécessité de prévoir un becquet ou déflecteur escamotable à l'extrémité d'obstacle qui doit être assez développé pour assurer l'efficacité et est soumis à des efforts importants.

Le brevet US 4 216 923 montre un système d'entrainement de volets par synchronisation obligeant l'ensemble à avoir des éléments de guidage et d'entrainement complexes et parallèles entre-eux.

Ainsi des problèmes subsistent pour l'adaptation d'un inverseur de poussée de ce type à un groupe moto-propulseur à très grand taux de dilution, en tenant compte des conditions d'installation sur avion et notamment de la réduction de masse, tout en évitant d'augmenter l'encombrement du moteur au niveau de son diamètre extérieur et de la garde au sol à respecter.L'installation de l'inverseur de poussée sur une nacelle de turbosoufflante à taux de dilution égal ou supérieur à quatre doit également rester possible. L'inverseur de poussée doit également assurer avec efficacité les performances requises d'inversion ainsi que, lors du fonctionnement en poussée directe, une paroi interne aérodynamiquement continue sans introduire de perturbations dommageables dans les écoulements. L'invention vise particulièrement à minimiser l'obstruction du canal secondaire par l'amont de l'obstacle pendant la phase d'ouverture de celui-ci. Un but de l'invention tout en assurant la sécurité de fonctionnement est de faciliter le déplacement de l'obstacle en tenant compte d'efforts axiaux ou radiaux importants. Un des buts de l'invention est aussi d'obtenir une simplicité de définition facilitant la réalisation et la maintenance.

Un inverseur de poussée de turbosoufflante conforme à l'invention et permettant d'obtenir les résultats rappelés ci-dessus sans encourir les inconvénients des solutions connues antérieures est caractérisé en ce que chaque élément déplaçable ou obstacle amené en position d'inversion de poussée est entrainé en rotation par l'intermédiaire d'au moins un élément de liaison autour d'un pivot mobile qui est entrainé en translation par au moins un ensemble constitué d'un moyen de commande et d'un élément de guidage, ledit moyen de commande entraîne l'obstacle par son aval dans une direction amont parallèle à l'axe de turbosoufflante et se trouve dans l'alignement ou le plan de l'élément de guidage.

Selon les applications, lesdits éléments sont placés dans le sens longitudinal, parallèles ou non par rapport à l'axe moteur, l'élément de guidage étant rectiligne ou comportant une ou plusieurs courbures.

D'autres caractéristiques et avantages de l'invention seront mieux compris à la lecture de la description qui va suivre d'un mode de réalisation de l'invention, en référence aux dessins annexés sur lesquels :
- la figure 1 représente selon une demi-vue schématique en coupe longitudinale par un plan passant par l'axe de rotation d'une turbosoufflante et par le milieu de l'élément déplaçable, un inverseur selon un mode de réalisation de l'invention en position jet direct ;
- la figure 2 représente le mode de réalisation décrite dans la figure 1, en position jet inversé ;
- la figure 3 représente en vue de l'avant, une perspective du mode de réalisation décrit dans les figures 1 et 2, dans une position intermédiaire entre la position jet direct et la position jet inversé ;
- la figure 4 représente dans une vue analogue à celle de la figure 3 un obstacle équipé de deux ensembles de manoeuvre et de guidage ;
- les figures 5 et 6 représentent en mode jet inversé et en mode jet direct, un autre mode de réalisation de l'invention dans laquelle les bielles latérales sont remplacées par un ou plusieurs vérin(s) ;
- les figures 7 et 8 représentent en mode jet inversé et en mode jet direct, un autre mode de réalisation de l'invention dans laquelle, le guidage axial de l'obstacle s'effectue dans une goulotte située autour du vérin ;
- la figure 9 représente en vue de l'avant, une perspective du mode de réalisation décrite dans les figures 7 et 8, dans une position intermédiaire entre la position jet direct et la position jet inversé ;
- les figures 10 et 11 représentent le détail en perspective de deux possibilités de guidage du coulisseau, assurant la liaison obstacle/vérin ;
- les figures 12 et 13 représentent dans une vue analogue à la figure 9, deux exemples d'obstacle équipé d'un seul organe de manoeuvre central, et de deux organes de guidage implantés de part et d'autre de l'organe de manoeuvre.

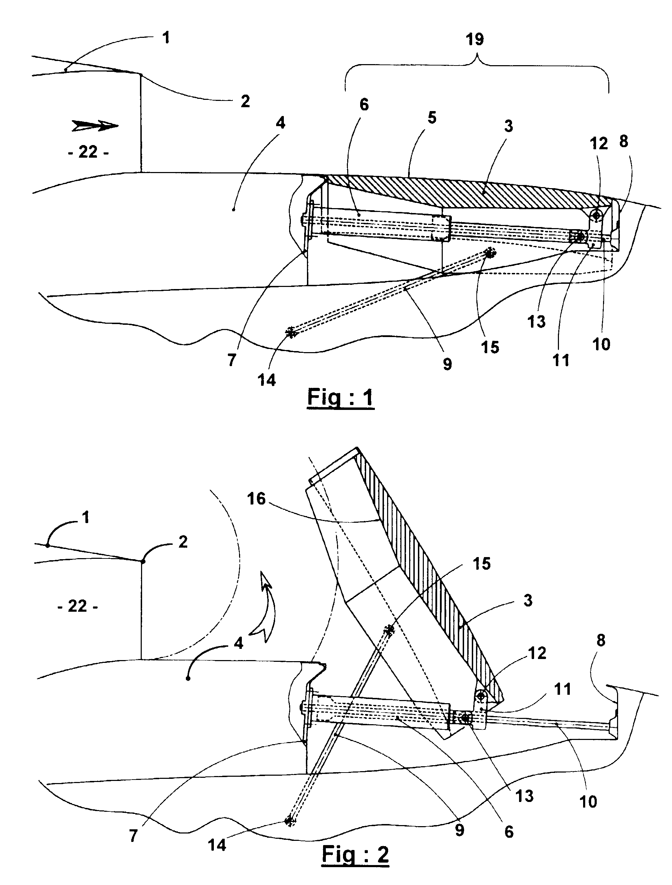

Selon un mode de réalisation représentée sur la figure 1, l'invention est installée en aval du canal secondaire 22 au-delà de l'extrémité aval ou bord de fuite 2 de la paroi radialement externe 1 du canal 22. La structure fixe du capot primaire 4 enveloppant le corps central de moteur comporte un inverseur de poussée 19 dont la partie mobile est constituée d'un ou plusieurs élément(s) déplaçable(s) ou obstacles 3, au nombre de deux, trois, quatre ou plus.

Chaque obstacle 3 comporte un panneau principal dont la surface radialement externe 5, dont la position rétractée correspond au fonctionnement en jet direct telle que représentée, se raccorde sur ses bords avec la surface du capot primaire 4 évitant ainsi notamment toutes perturbations aérodynamiques du flux secondaire du canal secondaire 22. La structure fixe 4 peut comporter une cloison amont 7 et une cloison aval 8, entre lesquelles est installé un élément de guidage 10 dont les extrémités peuvent être liées respectivement aux cloisons amont 7 et aval 8, ou à tout autre organe structural, l'extrémité amont étant relevée par rapport à l'extrémité aval. Cet élément assure le guidage axial du coulisseau 11 , ledit coulisseau étant relié d'une part à l'obstacle 3 au moyen d'un axe pivot 12 ou rotule, et d'autre part à l'extrémité de la tige du vérin 6 au point pivot 13.

Dans l'exemple représenté sur la figure 1, le vérin 6 monté de manière articulée ou fixe par rapport à la paroi amont 7 est du type vérin creux ce qui autorise un montage coaxial par rapport à l'élément de guidage 10. Le vérin peut être simple, téléscopique, hydraulique, électrique, pneumatique ou mécanique.

Il est à préciser qu'un système vis-écrou, vis à billes ou à rouleaux, peut être utilisé en lieu et place du vérin 6, le coulisseau 11 devant alors en fonction de la technologie utilisée être équipé soit d'un taraudage, de billes ou de rouleaux.

De plus, sur la figure 1, ledit vérin de commande 6 est placé en amont du point d'entrainement 12 de l'obstacle 3 entre les cloisons amont 7 et aval 8, mais on peut envisager une implantation du vérin 6 en aval dudit point d'entrainement, ce qui impliquerait dans ce cas un déplacement de l'obstacle en poussant.

Au moins une bielle 9 est solidaire de l'élément déplaçable par l'une de ses extrémités au point pivot 15, en partie latérale ou en tout point intermédiaire de l'élément déplaçable, son autre extrémité étant solidaire de la structure fixe du capot primaire au point pivot 14, ce dernier étant implanté soit sur la cloison amont 7, soit sur une paroi latérale ou poutre située entre les éléments déplaçables 3, ou tout autre point de la structure fixe 4.

On le voit, la cinématique d'ouverture des obstacles 3 réalisée par l'association de la rotation de la bielle 9 avec l'entrainement de l'aval de l'obstacle 3 vers l'amont permet d'assurer entre le bord amont de l'obstacle 3 et le bord de fuite 2 de la nacelle externe 1 une distance égale au moins à deux fois la hauteur de veine comprise entre le bord de fuite 2 et le capot primaire 4 minimisant ainsi l'obstruction du canal secondaire 22.

L'inclinaison de l'élément de guidage 10 permet d'optimiser le dimensionnement du passage qui doit être capable de laisser passer le flux 22 sans compromettre le fonctionnement du moteur. Il est à noter que pour des raisons propres aux effets aérodynamiques recherchés, l'élément de guidage peut être incliné dans l'autre sens, c'est à dire que l'extrémité aval peut être relevée par rapport à l'extrémité amont ou avoir une position intermédiaire.

L'élément de guidage 10 peut être rectiligne ou peut comporter une ou plusieurs courbures.

La figure 2 représente le vérin 6 entrainant de l'aval vers l'amont l'élément déplaçable 3, la rotation de ce dernier autour de l'axe pivot 12 étant commandé par la ou les bielles 9. Il est à noter qu'une forme appropriée de la paroi interne 16 de l'élément déplaçable peut permettre un guidage optimisé du flux en position jet inversé. Un becquet avant et des obstacles latéraux, de forme et de dimensions adaptées aux effets aérodynamiques recherchés peuvent y être adjoints.

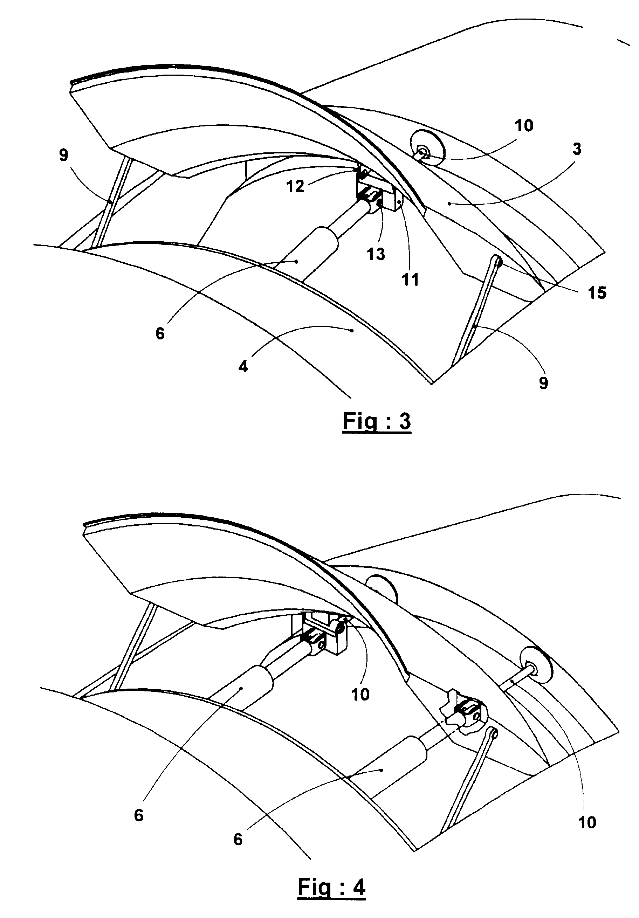

La figure 3 représente une vue de l'avant, en perspective du mode de réalisation décrit précédemment, dans une position intermédiaire comprise entre la position jet direct et la position jet inversé, sur laquelle le vérin de commande 6 et l'élément de guidage 10 sont implantés dans un plan passant par l'axe moteur et le milieu de l'élément déplaçable 3.

La figure 4 représente dans une vue identique à celle de la figure 3 un élément déplaçable 3 équipé de deux éléments de guidage 10 et de commande 6 implantés de part et d'autre du plan milieu, entre le plan milieu et l'extrémité latérale de chaque élément déplaçable 3.

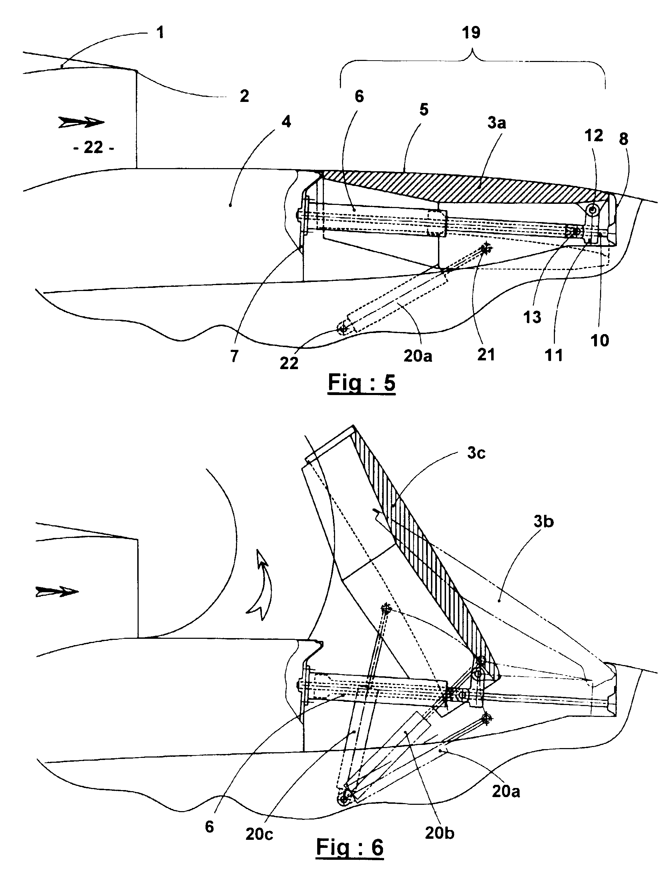

Les figures 5 et 6 montrent une cinématique d'ouverture d'obstacle différente de celle décrite précédemment, du fait du remplacement des bielles latérales 9 par un ou plusieurs vérins 20. Ledit vérin 20 a l'une de ses extrémités solidaire de l'obstacle 3 au point pivot 21, l'autre étant solidaire de la structure fixe au point pivot 22. Il peut être de type électrique, pneumatique ou hydraulique.

Lors de la phase d'ouverture, ce dernier entraine l'obstacle de la position 3a à la position 3b par une rotation autour de l'axe 12. Dès que le vérin 20 est en fin de course, ce qui correspond à la position 20b, le vérin de manoeuvre principal 6 est alors actionné, entrainant l'obstacle 3 de la position 3b à la position 3c. Il est à noter qu'une cinématique d'ouverture pendant laquelle les vérins 6 et 20 sont actionnés simultanément peut être envisagée. Par ailleurs, il est possible d'utiliser le vérin 20 comme tiroir de commande du vérin 6 afin de ne pas compliquer le système de commande.

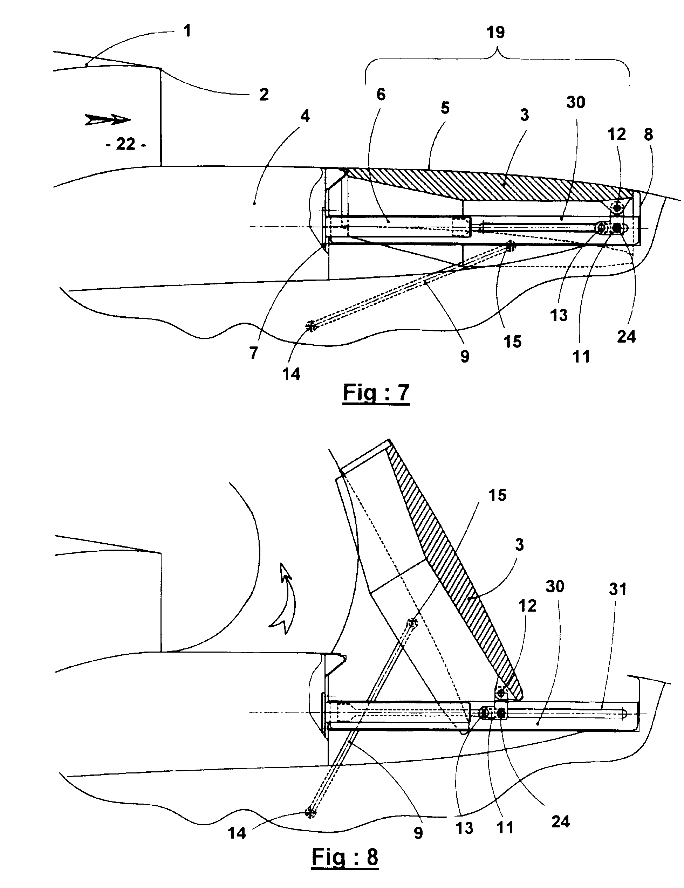

Les figures 7, 8 et 9 représentent un autre mode de réalisation de l'invention, la principale différence étant située au niveau de l'élément de guidage. Dans cette réalisation, une goulotte 30 reliée à la structure fixe 4 au niveau des cloisons 7 et 8 possède sur ses parois latérales 33 et 35 des ouvertures 31 assurant le guidage du coulisseau 11 grâce par exemple, à un ou plusieurs galets 24. Cette réalisation permet notamment de faciliter le déplacement de l'élément déplaçable 3 lors d'efforts radiaux importants, et peut être appliquée seule ou doublée par obstacle. Le mode de conception à vérin creux optimise, quant à lui, le fonctionnement avec efforts axiaux très importants. Ce peut être également l'extrémité latérale de l'obstacle qui comprenne le ou les galets, les rainures étant dans ce cas localisées dans les poutres latérales.

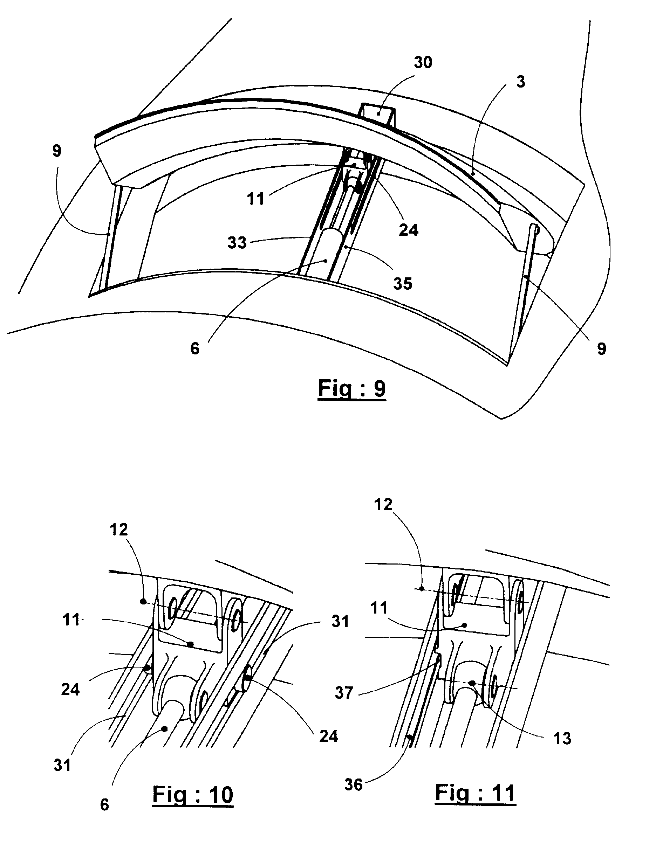

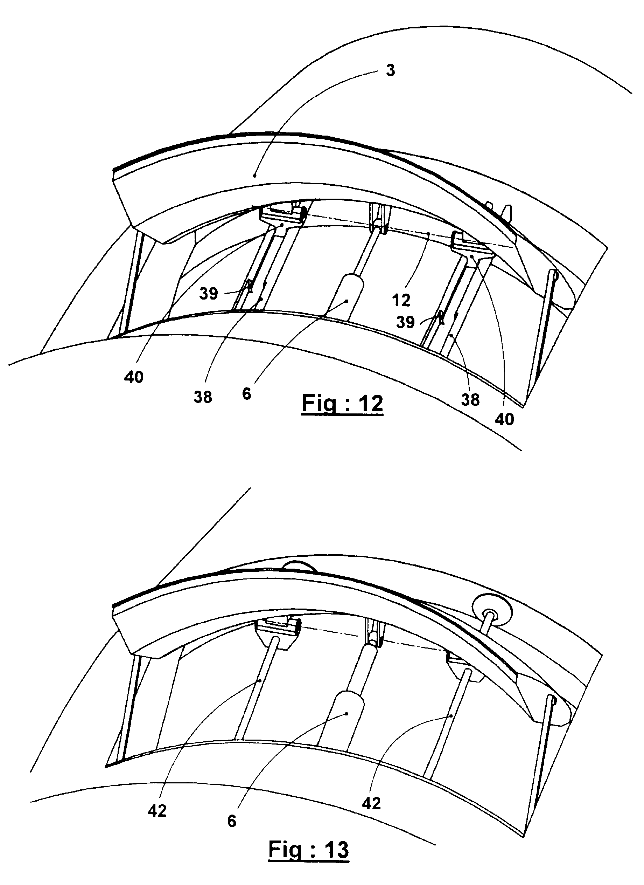

Les figures 10 et 11 représentent le détail de deux exemples de réalisation pouvant assurer le guidage du coulisseau 11 dans la goulotte 30. La figure 10 correspond au mode de guidage décrit ci-dessus et la figure 11 montre une variante possible, dans laquelle le coulisseau 11 possède sur ses côtés des usinages, ou rainures 37 assurant le guidage dudit coulisseau sur et entre des tenons 36 intégrés dans les parois latérales 33 et 35.

Ces deux modes de guidage représentent deux possibilités parmi de nombreuses autres bien connues de l'homme de métier, reposant sur une ou des partie(s) mâle(s) guidée(s) dans une ou des partie(s) femelle(s) et pouvant s'appliquer à la présente invention.

Selon la figure 9, le vérin 6 et la goulotte 30 sont implantés dans un plan passant par l'axe moteur et le milieu de l'élément déplaçable 3, mais d'autres implantations peuvent être envisagées, comme le montrent les figures 12 et 13.

Sur la figure 12 l'élément déplaçable 3 est commandé par un seul vérin 6 implanté dans son plan médian, et est guidé axialement par deux glissières 38 équipées de rainures 39 recevant les coulisseaux 40 situés de part et d'autre dudit vérin. Le point pivot du vérin 6 sur l'élément déplaçable 3 pouvant être aligné ou non avec les axes d'articulation 12 des coulisseaux 40 avec l'élément déplaçable 3.

La figure 13 représente une variante du mode de réalisation de la liaison glissière en implantant de part et d'autre du vérin central 6 deux guidages 42 identiques à ceux décrits sur les figures 1 à 4.

Bien sûr, certains systèmes ou/et certaines configurations peuvent être utilisés seuls ou en association entre-eux, permettant les possibilités suivantes :
- les bielles 9 peuvent être latérales comme représentées sur les figures mais peuvent aussi avoir une position intermédiaire entre la position précédemment définie et le milieu de l'élément déplaçable ;
- selon la position du point de rotation 12 dans une zone amont de l'élément déplaçable 3, l'aval de l'obstacle peut comporter une découpe par point d'accrochage afin de permettre le débattement total de l'élément déplaçable 3 ;
- ledit point d'accrochage 12 peut déborder de l'aval de la structure de l'élément déplaçable 3;
- le corps du vérin 6 peut être inséré complètement en amont de la paroi amont 7 de la structure fixe 4 ;
- selon la cinématique retenue et la disposition des organes de manoeuvre, un contact physique peut être appliqué entre l'élément déplaçable 3 et la structure fixe 4 permettant selon l'effet aérodynamique recherché en mode jet inversé une étanchéité entre lesdits éléments.

## Revendications

1. Inverseur de poussée de turbosoufflante comportant des éléments déplaçables ou obstacles (3) qui sont escamotés, en position de poussée directe, dans la paroi du capot primaire (4) enveloppant le corps central de moteur et sont déployés, au-delà de l'extrémité aval (2) de la paroi radialement externe (1) du canal (22) de flux secondaire, sous l'action de moyens de commande (6) à vérins disposés à l'intérieur dudit capot primaire (4), de manière à constituer des obstacles (3) formant un ensemble annulaire de déviation du flux secondaire en procurant une inversion de poussée caractérisé en ce que chaque élément déplaçable ou obstacle (3) amené en position d'inversion de poussée est entrainé en rotation par l'intermédiaire d'au moins un élément de liaison (9; 20) autour d'un pivot mobile (12) qui est entrainé en translation par au moins un ensemble constitué dudit moyen de commande (6) et d'un élément de guidage (10 ;30), ledit moyen de commande (6) entraine l'obstacle (3) par son aval dans une direction amont parallèle à l'axe de turbosoufflante et se trouve dans l'alignement de l'élément de guidage (10; 30).

2. Inverseur de poussée de turbosoufflante selon la revendication 1 caractérisé en ce que les extrémités de l'élément de guidage (10) sont fixées respectivement sur une cloison amont (7) et une cloison aval (8) solidaires de la structure fixe de capot primaire (4).

3. Inverseur de poussée de turbosoufflante selon l'une des revendications 1 ou 2 caractérisé en ce que l'extrémité amont de l'élément de guidage (10) est relevée par rapport à l'extrémité aval.

4. Inverseur de poussée de turbosoufflante selon l'une des revendications 1 ou 2, caractérisé en ce que l'extrémité aval de l'élément de guidage (10) est relevée par rapport à l'extrémité amont.

5. Inverseur de poussée de turbosoufflante selon la revendication 1 caractérisé en ce que l'élément de guidage est constitué par une goulotte (30) dont les parois latérales (33, 35) présentent des ouvertures (31) guidant le déplacement de galets (24) solidaires de l'obstacle (3).

6. Inverseur de poussée de turbosoufflante selon l'une quelconque des revendications 1 à 5 caractérisé en ce que l'élément de guidage est rectiligne.

7. Inverseur de poussée de turbosoufflante selon l'une quelconque des revendications 1 à 5 caractérisé en ce que l'élément de guidage comporte au moins une courbure.

8. Inverseur de poussée de turbosoufflante selon l'une quelconque des revendications 1 à 5 caractérisé en ce que l'élément de liaison entre l'obstacle (3) et la structure fixe du capot primaire (14) est constitué par une bielle (9).

9. Inverseur de poussée de turbosoufflante selon l'une quelconque des revendications 1 à 5 caractérisé en ce que l'élément de liaison entre l'obstacle (3) et la structure fixe du capot primaire (22)est constitué par un vérin (20).

10. Inverseur de poussée de turbosoufflante comportant des éléments déplaçables ou obstacles (3) qui sont escamotés, en position de poussée directe, dans la paroi du capot primaire (4) enveloppant le corps central de moteur et sont déployés, au-delà de l'extrémité aval (2) de la paroi radialement externe (1) du canal (22) de flux secondaire, sous l'action de moyens de commande (6) à vérins disposés à l'intérieur dudit capot primaire (4), de manière à constituer des obstacles (3) formant un ensemble annulaire de déviation du flux secondaire en procurant une inversion de poussée caractérisée en ce que chaque élément déplaçable ou obstacle (3) amené en position d'inversion de poussée est entrainé en rotation par l'intermédiaire d'au moins un élément de liaison (9; 20) autour d'un pivot mobile (21) qui est entrainé en translation par au moins un ensemble constitué d'un moyen de commande (6) et de deux éléments de guidage (38; 42), ledit moyen de commande entraine l'obstacle (3) par son aval dans une direction amont sensiblement parallèle à l'axe de turbosoufflante et se trouve dans le plan de l'élément de guidage.
